# EUROPÄISCHE PATENTANMELDUNG

(11) **EP 1 164 047 A2**
(43) Veröffentlichungstag der Anmeldung: **19.12.2001**
(21) Anmeldenummer: 01109831.6
(22) Anmeldetag: 21.04.2001
(51) Int. Cl.: B60L 3/10

(54) **Traktionsregelung für ein Schienenfahrzeug**

(30) Priorität: 20.05.2000 DE 10025104
(71) Anmelder: DaimlerChrysler Rail Systems GmbH, 13627 Berlin (DE)
(72) Erfinder: Menth, Stefan, 5430 Wettingen (CH); Ehrler, Urs, 5412 Gebenstorf (CH)
(74) Vertreter: Cohausz & Florack Patentanwälte

(57) **Zusammenfassung**

Es wird eine Traktionsregelung, insbesondere ein Verfahren zur Traktionsregelung für ein Schienenfahrzeug angegeben, welches einen Drehmomentsollwert (Mₛₒₗₗ) für eine als Drehmomentreglungseinheit (3) ausgebildeten Motorregelungseinheit durch eine Radschlupfregelungseinheit (1) vorgibt und den Drehmomentsollwert (Mₛₒₗₗ) durch die Radschlupfregelungseinheit (1) bei Erreichen eines vorgebbaren Schwellwertes eines aus einem momentanen Drehzahlwert (n) und einem berechneten Referenzdrehzahlwert gebildeten Differenzdrehzahlwertes (Δn) eines Antriebsmotors eines Radsatzes reduziert. Zudem wird mindestens einem als Asynchronmaschine ausgebildeten Antriebsmotor eines Radsatzes des Schienenfahrzeugs ein Ständerfrequenzwert (f_{S}) vorgegeben, wobei bei einem Differenzdrehzahlwert (Δn) kleiner als der Differenzdrehzahlschwellwert und bei Erreichen eines Kraftschlussmaximums zwischen Radsatz und Schiene der Ständerfrequenzwert (f_{S}) auf einen ständerfrequenzabhängigen Begrenzungswert (f_{SG}) begrenzt. Darüberhinaus wird eine Vorrichtung zur Durchführung des Verfahrens offenbart.

## Beschreibung

### Technisches Gebiet

Die Erfindung bezieht sich auf das Gebiet der Antriebstechnik. Sie geht aus von einem Verfahren und einer Vorrichtung zur Traktionsregelung für ein Schienenfahrzeug gemäss dem Oberbegriff der unabhängigen Ansprüche.

### Stand der Technik

Bei elektrisch angetriebenen Schienenfahrzeugen mit drehmomentgeregelten Antriebsmotoren, insbesondere mit Asynchronmaschinen, kann es zu Schlupfzuständen zwischen Antriebsrädern und Schiene kommen, bei denen die Antriebsräder unkontrolliert mehr oder weniger stark durchdrehen. Hierdurch ergibt sich ein instabiler Betrieb des Fahrzeugantriebs, bei dem der maximal mögliche Kraftschluss zwischen Antriebsrädern und Schiene unterschritten wird. Zudem unterliegen sowohl die Antriebsräder als auch die Schiene einem erhöhten Verschleiss. Ein Lösungsvorschlag für dieses Problems ist in der DE 197 27 507 A1 angegeben.

Dort ist eine Motorregelungseinheit offenbart, die als Drehmomentenregelungseinheit ausgebildet ist. Dieser Drehmomentreglungseinheit übergeordnet ist eine Radschlupfregelungseinheit, die die Aufgabe hat, den Schlupf zwischen Rad und Schiene bei maximal möglicher Zugkraft des Schienenfahrzeugs zu minimieren.

Eine vorstehend verwendete, heute übliche Radschlupfregelungseinheit generiert am Ausgang einen Sollzugkraftwert beziehungsweise einen dazu korrelierenden Drehmomentsollwert, der der Drehmomentreglungseinheit zugeführt wird. Bei einem beispielsweise von einem Lokführer vorgewählten Zugkraftwert erhöht die Radschlupfregelungseinheit den Drehmomentsollwert und hält diesen anschliessend auf einen bestimmten Wert konstant. Um den Drehmomentistwert des Rotors des Antriebsmotors auf den von der Radschlupfregelungseinheit vorgegebenen Drehmomentsollwert auszuregeln, wird durch die Drehmomentreglungseinheit der Ständerfrequenzwert des als Asynchronmaschine ausgeführten Antriebsmotors angepasst. Parallel dazu passt sich der Drehzahlwert des vom Antriebsmotor angetriebenen Radsatzes. Ist der Drehmomentistwert auf den Drehmomentsollwert ausgeregelt, so stellt sich auch ein konstanter Drehzahlwert des angetriebenen Radsatzes ein.

Bei Änderungen der Schienenverhältnisse, wie sie durch Wettereinflüsse und/oder durch Verschmutzung beispielsweise in einem Gleisbogen auftreten können, kann das Kraftschlussmaximum zwischen Radsatz und Schiene innerhalb kurzer Zeit erreicht werden, wobei sich das Kraftschlussmaximum in dieser kurzen Zeit reduziert, d.h. das Lastmoment zwischen Rad und Schiene und damit der Drehmomentistwert wird kleiner als der eingeprägte Drehmomentsollwert des Rotor, wodurch es zu einer Beschleunigung des Radsatzes kommt. Dies bedeutet, dass sich der Drehzahlwert des Radsatzes erhöht. Um den Drehmomentistwert auf den der Drehmomentreglungseinheit eingeprägten Drehmomentsollwert auszuregeln, erhöht die Drehmomentreglungseinheit den Ständerfrequenzwert des Antriebsmotors, wobei ebenfalls der Drehzahlwert erhöht wird. Erreicht ein Differenzdrehzahlwert, d.h. die Differenz zwischen dem momentanen Drehzahlwert des Radsatzes und einem berechneten Referenzdrehzahlwert, einen vorgegebenen Schwellwert, so reduziert die Radschlupfregelungseinheit typischerweise den Drehmomentsollwert direkt auf einen vorgebbaren Wert oder schrittweise über mehrere vorgebbaren Werte, da Differenzdrehzahlwerte wesentlich grösser als Null ein Indiz für vorhanden Schlupf zwischen Radsatz und Schiene sind. Infolge dieser Reduzierung des Drehmomentsollwertes, der, wie bereits erwähnt der Drehmomentreglungseinheit zugeführt ist, reduziert die Drehmomentreglungseinheit den Ständerfrequenzwert, so dass der Antriebsmotor abgebremst wird und damit eine Ausregelung des Drehmomentistwertes auf den Drehmomentsollwert stattfinden kann.

Problematisch bei derartigen Einflussmassnahmen ist, dass die Radschlupfregelung erst bei Erreichen des Schwellwertes der Differenzdrehzahl den Drehmomentsollwert reduziert. Insbesondere beim Anfahren des Schienenfahrzeugs und damit einhergehenden schnellen Beschleunigungsänderungen des Antriebsmotors kann es aber bereits zu Schlupfzuständen zwischen Radsatz und Schiene kommen, so dass die Antriebsräder sowie die Schienen untragbar verschlissen werden können. Wird schliesslich bei Erreichen des Differenzdrehzahlschwellwertes der Drehmomentsollwert reduziert, ist diese Reduktion in der Grössenordnung von 50% des vorherigen Drehmomentsollwertes. Auf derartig drastische Eingriffe der Radschlupfregelungseinheit reagiert die Ständerfrequenzregelung in sehr kurzer Zeit auf den ihr vorgegebenen reduzierten Drehmomentsollwert mit einer Reduktion der Ständerfrequenz, woraus sehr grosse mechanische Belastungen des Antriebsmotors, der damit verbundenen mechanischen Einheiten, wie beispielsweise Getriebe, sowie der Zughaken resultieren können. Eine geeignete Traktionsregelung, insbesondere ein Verfahren und eine Vorrichtung zur Durchführung des Verfahrens zur Lösung des vorstehend genannten Problems ist derzeit nicht bekannt.

### Darstellung der Erfindung

Aufgabe der vorliegenden Erfindung ist es deshalb, ein Verfahren zur Traktionsregelung für ein Schienenfahrzeug anzugeben, durch welches eine Minimierung des Schlupfes zwischen Schiene und Radsatz bei gleichzeitig geringen mechanischen Belastungen des kompletten Antriebsstranges, insbesondere auch beim Anfahren des Fahrzeugs erreicht wird, sowie eine Vorrichtung anzugeben, mit der das Verfahren durchgeführt wird. Diese Aufgabe wird durch die Merkmale der unabhängigen Ansprüche gelöst. In den Unteransprüchen sind vorteilhafte Weiterbildungen der Erfindung angegeben.

Beim erfindungsgemässen Verfahren wird ein Drehmomentsollwert durch eine Radschlupfregelungseinheit für eine einen Ständerfrequenzwert für einen Antriebsmotor vorgebende Drehmomentreglungseinheit vorgegeben, wobei bei Erreichen eines vorgebbaren Schwellwertes eines gebildeten Differenzdrehzahlwertes der Drehmomentsollwert reduziert wird. Erfindungsgemäss wird bei einem Differenzdrehzahlwert kleiner als der Differenzdrehzahlschwellwert und bei Erreichen eines Kraftschlussmaximums zwischen Radsatz und Schiene der Ständerfrequenzwert auf einen ständerfrequenzabhängigen Begrenzungswert reduziert. Dadurch wird äusserst vorteilhaft erreicht, dass insbesondere beim Anfahren und bei schnellen Beschleunigungsänderungen des Antriebsmotors, insbesondere vor Erreichen des Differenzdrehzahlschwellwertes, der Antriebsmotor bei sich anbahnenden Schlupfzuständen nicht weiter beschleunigt wird, um nicht durch eine Reduktion des Drehmomentsollwertes durch die Radschlupfregelungseinheit stark abgebremst zu werden. Somit wird insbesondere beim Anfahren des Fahrzeugs und bei möglichen schnellen Beschleunigungsänderungen des Antriebsmotors vermieden, dass die Radschlupfregelungseinheit bei Erreichen des Differenzdrehzahlschwellwertes den Drehmomentsollwert drastisch reduziert. Auf diese Weise werden mechanische Belastungen des Antriebsmotors und den damit verbundenen mechanischen Einheiten wie beispielsweise Getriebe sowie Zughaken vorteilhaft reduziert.

Weiterhin wird erfindungsgemäss während der Begrenzung des Ständerfrequenzwertes der Drehmomentsollwert auf den aktuellen Drehmomentistwert gesetzt. Dadurch wird der Ständerfrequenzwert aus der Begrenzung geführt, so dass die Traktionsregelung danach durch erneute Vorgabe des Drehmomentsollwertes für die Drehmomentreglungseinheit durch die Radschlupfregelungseinheit und durch Vorgabe des Ständerfrequenzwertes für den Antriebsmotor durch die Drehmomentreglungseinheit aus dem Begrenzungszustand wieder in den Regelungszustand übergehen kann. Der Schlupf und damit der Verschleiss zwischen Radsatz und Schiene kann dadurch vorteilhaft auf ein Minimum reduziert werden, da nach der Begrenzung des Ständerfrequenzwertes sofort in den geregelten Zustand der Traktionsregelung übergegangen wird, ohne dass die Traktionsregelung von gängigen drastischen Eingriffen in Form von Reduktionen des Drehmomentsollwertes gestört wird.

Die erfindungsgemässe Vorrichtung zur Durchführung des Verfahrens weist eine Begrenzungseinheit auf, die den Ständerfrequenzwert bei einem Differenzdrehzahlwert kleiner als der Differenzdrehzahlschwellwert und bei Erreichen eines Krafschlussmaximums zwischen Radsatz und Schiene auf den der Begrenzungseinheit zugeführten ständerfrequenzabhängigen Begrenzungswert begrenzt. Darüberhinaus ist eine durch ein Rücksetzsignal gesteuerte Umschalteinheit mit der Drehmomentreglungseinheit verbunden, wobei die Begrenzungseinheit durch Ausgabe des Rücksetzsignals bei Erreichen des Kraftschlussmaximums und bei einem Differenzdrehzahlwert kleiner als der Differenzdrehzahlschwellwert mit der Umschalteinheit verbunden ist. Dadurch ist in besonders einfache Weise gewährleistet, dass der Ständerfrequenzwert bei einem Differenzdrehzahlwert kleiner als der Differenzdrehzahlschwellwert und bei Erreichen eines Krafschlussmaximums reduziert wird und mit der Ausgabe des Rücksetzsignals an die Umschalteinheit der Drehmomentsollwert auf den aktuellen Drehmomentistwert gesetzt wird.

Weiterhin wird vorteilhaft eine Vorrichtung ausgebildet, die aufgrund ihres einfachen und mit wenigen Elementen auskommenden Aufbaus sowohl mit diskreten Bauelementen realisiert als auch beispielsweise in einem digitalen Mikroprozessor implementiert werden kann. Sie stellt somit eine einfache und kostengünstige Lösung dar, die zusätzlich variabel umgesetzt und an verschiedenste Antriebsmotoren angepasst werden kann.

Diese und weitere Aufgaben, Vorteile und Merkmale der vorliegenden Erfindung werden aus der nachfolgenden Beschreibung eines bevorzugten Ausführungsbeispiels der Erfindung offensichtlich.

### Kurze Beschreibung der Zeichnungen

Nachfolgend wird die Erfindung anhand eines Ausführungsbeispiels im Zusammenhang mit der Zeichnung näher erläutert.

Es zeigen:
- **Fig. 1**: eine Ausführungsform einer erfindungsgemässen Vorrichtung zur Durchführung des Verfahrens zur Traktionsregelung für ein Schienenfahrzeug,
- **Fig. 2**: ein Ablaufdiagramm eines erfindungsgemässen Verfahrens zur Traktionsregelung für ein Schienenfahrzeug und
- **Fig. 3**: eine Kraftschlusskennlinie.

Grundsätzlich sind in den Figuren gleiche Teile mit gleichen Bezugszeichen versehen.

### Wege zur Ausführung der Erfindung

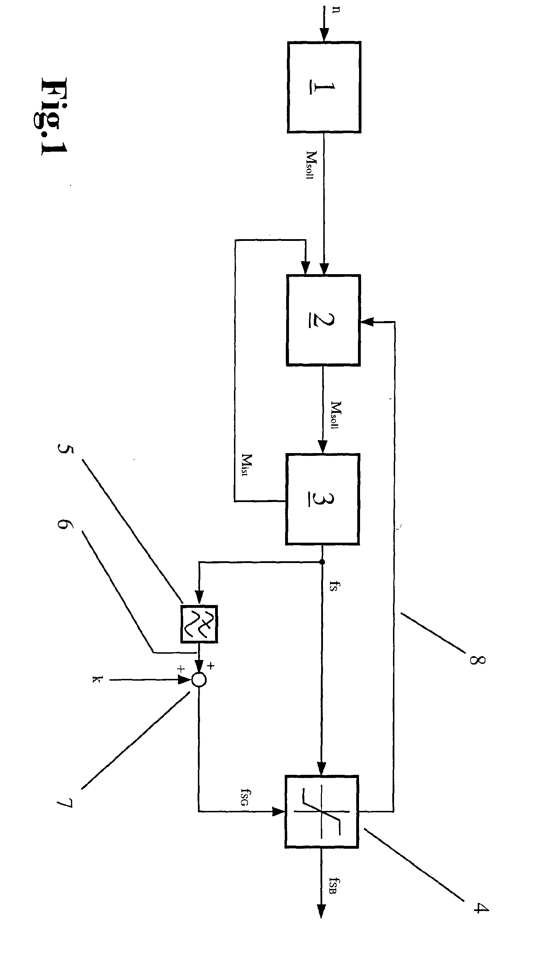

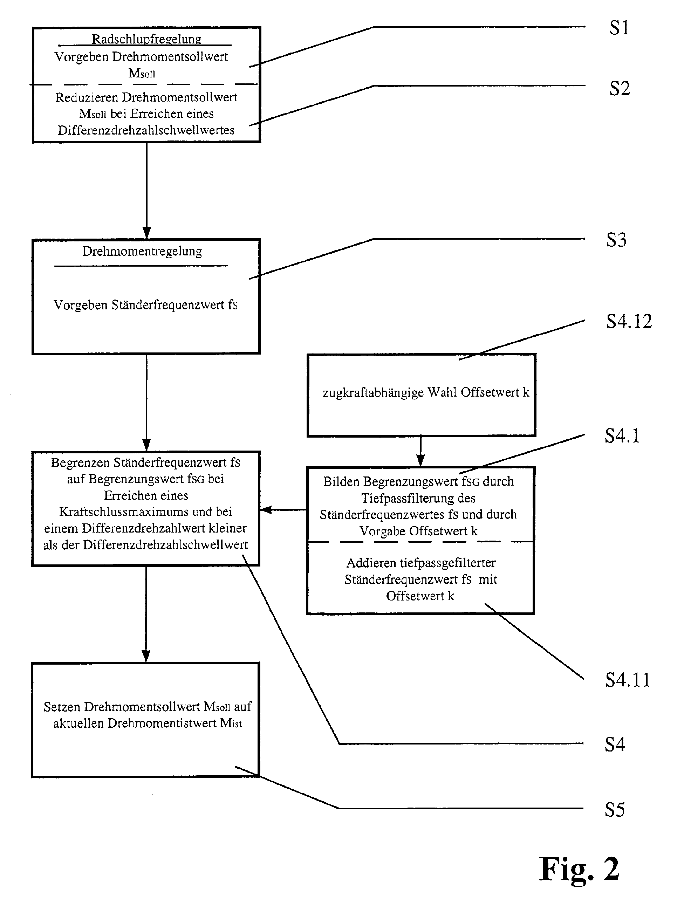

Fig. 1 zeigt eine erfindungsgemässe Ausführungsform der Vorrichtung zur Durchführung des Verfahrens zur Traktionsregelung für ein Schienenfahrzeug. In Fig. 2 ist zudem ein Ablaufdiagramm des erfindungsgemässen Verfahren zur Traktionsregelung für ein Schienenfahrzeug gezeigt.

Die Vorrichtung gemäss Fig. 1 umfasst eine Radschlupfregelungseinheit 1, der ein Wert einer momentanen Drehzahl (n) eines Antriebsmotors eines Radsatzes zugeführt ist. Die Radschlupfregelungseinheit 1 ist einer als Drehmomentreglungseinheit 3 ausgebildeten Motorregelungseinheit übergeordnet.

Gemäss dem in Fig. 2 gezeigten Ablaufdiagramm des erfindungsgemässen Verfahrens gibt in einem ersten Verfahrensschritt (S1) die Radschlupfregelungseinheit 1 der Drehmomentreglungseinheit 3 einen Drehmomentsollwert (Mₛₒₗₗ) vor. Durch dieser Vorgabe ergibt sich gemäss der in Fig. 1 gezeigten erfindungsgemässen Vorrichtung eine mittelbare Verbindung zwischen der Drehmomentreglungseinheit 3 und der Radschlupfregelungseinheit 1.

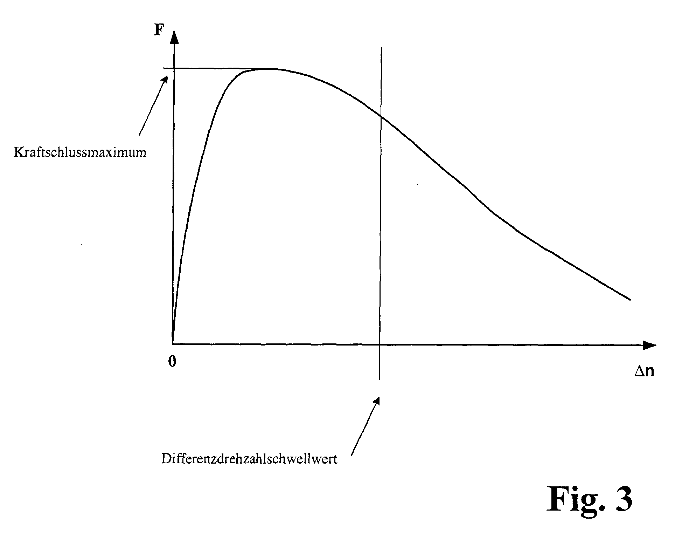

In Fig. 3 ist eine typische Kraftschlusskennlinie gezeigt, in der die Kraft F zwischen Rad und Schiene (Kraftschluss) über einem Differenzdrehzahlwert (Δn) aufgetragen ist. Ist der Differenzdrehzahlwert (Δn) wesentlich grösser als Null, so liegt Schlupf zwischen Radsatz und Schiene vor. Weiterhin ist in Fig. 3 ein vorgebbarer Schwellwert der Differenzdrehzahl (Δn) eingezeichnet. In einem weiteren Verfahrensschritt (S2) gemäss Fig. 2 wird von der Radschlupfregelungseinheit 1 aus dem Drehzahlwert (n) und einem in der Radschlupfregelungseinheit 1 berechneten Referenzdrehzahlwert der Differenzdrehzahlwert (Δn) gebildet. Bei Erreichen des in Fig. 3 eingezeichneten vorgebbaren Differenzdrehzahlschwellwertes reduziert die Radschlupfregelungseinheit 1 den Drehmomentsollwert (Mₛₒₗₗ). Dieser Drehmomentsollwert (Mₛₒₗₗ) liegt gemäss Fig. 1 am Ausgang der Radschlupfregelungseinheit 1 an. Desweiteren gibt die Drehmomentreglungseinheit 3 in einem weiteren Verfahrensschritt (S3) gemäss Fig. 2 mindestens einem als Asynchronmaschine ausgebildeten Antriebsmotor eines Radsatzes des Schienenfahrzeugs einen Ständerfrequenzwert (f_{S}) vor, der gemäss Fig. 1 am Ausgang der Drehmomentreglungseinheit 3 anliegt. Die Drehmomentreglungseinheit 3 reagiert auf den reduzierten Drehmomentsollwert (Mₛₒₗₗ) mit der Ausgabe eines reduzierten Ständerfrequenzwertes (f_{S}), um den Antriebsmotor abzubremsen.

Erfindungsgemäss wird in einem zusätzlichen Verfahrensschritt (S4) gemäss Fig. 2 der Ständerfrequenzwert (f_{S}) bei einem Differenzdrehzahlwert (Δn) kleiner als der Differenzdrehzahlschwellwert und bei Erreichen eines Kraftschlussmaximums zwischen Radsatz und Schiene auf einen ständerfrequenzabhängigen Begrenzungswert (f_{SG}) begrenzt. Gemäss Fig. 1 ist dazu erfindungsgemäss eine Begrenzungseinheit 4 vorgesehen, der der Ständerfrequenzwert (f_{S}) und der ständerfrequenzabhängige Begrenzungswert (f_{SG}) zugeführt sind, wobei am Ausgang der Begrenzungseinheit 4 ein begrenzter Ständerfrequenzwert (f_{SB}) anliegt. Der begrenzte Ständerfrequenzwert (f_{SB}) wird einer der Übersichtlichkeit wegen nicht dargestellten Modulatoreinheit zugeführt, die entsprechende Signale für einen den Antriebsmotor speisenden Antriebswechselrichter generiert, wobei die Modulatoreinheit mit dem Antriebswechselrichter verbunden ist. Durch die Begrenzung des Ständerfrequenzwertes (f_{S}) aufgrund des vorstehend genannten Kriteriums wird bei schnellen Beschleunigungsänderungen des Antriebsmotors, wie sie insbesondere beim Anfahren des Schienenfahrzeugs auftreten können, vermieden, dass der Antriebsmotor weiter beschleunigt wird und somit erheblicher Schlupf zwischen Radsatz und Schiene und der damit einhergehende Verschleiss auftritt. Zudem werden drastische Reduktionen des Drehmomentsollwertes (Mₛₒₗₗ) durch die Radschlupfregelungseinheit 1 vermieden, wodurch vorteilhaft eine Minimierung der mechanischen Belastungen des gesamten Antriebsstranges sowie beispielsweise der Zughaken erreicht werden kann.

Ferner wird gemäss Fig. 2 der ständerfrequenzabhängige Begrenzungswert (f_{SG}) mittels einem für eine Tiefpassfilterung vorgesehenen Tiefpassfilter 5 und mittels Vorgabe eines Offsetwertes (k) gebildet (S4.1). Der am Ausgang des Tiefpassfilters 5 anliegende tiefpassgefilterte Ständerfrequenzwert 6 ist zusammen mit dem Offsetwert (k) gemäss Fig. 1 einem Summierer 7 zugeführt, der durch Addieren der beiden zugeführten Werte den ständerfrequenzabhängige Begrenzungswert (f_{SG}) gemäss Fig. 2 (S4.11) bildet. Der Vorteil der vorstehend beschriebenen Bildung des ständerfrequenzabhängigen Begrenzungswerts (f_{SG}) liegt darin, dass der Ständerfrequenzwert (f_{S}) einer variablen Begrenzung, insbesondere in Abhängigkeit seines eigenen Wertes, unterliegt. Durch die Wahl des Offsetwertes (k) ist es weiterhin möglich, dass die Bandbreite, in der sich die Begrenzung des Ständerfrequenzwertes (f_{S}) bewegen kann, eingestellt werden kann. Vorzugweise wird dabei der Offsetwert (k) gemäss Fig. 2 zugkraftabhängig gewählt (S4.12), d.h. für kleine geforderte Zugkräfte ein kleiner Wert, da die Möglichkeit eines Schlupfzustandes eher gering ist und die Bandbreite der Begrenzung des Ständerfrequenzwertes (f_{S}) somit ebenfalls in engen Grenzen gehalten werden kann. Bei grossen geforderten Zugkräften hingegen wird vorteilhaft ein grosser Wert für den Offsetwert (k) gewählt, da Schlupfzustände sehr wahrscheinlich sind und damit die Bandbreite der Begrenzung des Ständerfrequenzwertes (fs) gross gehalten werden kann.

Gemäss Fig. 1 ist zwischen der Radschlupfregelungseinheit 1 und der Drehmomentreglungseinheit 3 eine Umschalteinheit 2 angeordnet. Die Umschalteinheit 2 ist an ihrem Eingang mit der Radschlupfregelungseinheit 1 verbunden, wobei am Eingang der Umschalteinheit 2 sowie an ihrem Ausgang der Drehmomentsollwert (Mₛₒₗₗ) anliegt. Zudem ist die Umschalteinheit 2 mit ihrem Ausgang mit der Drehmomentreglungseinheit 2 verbunden. Die Begrenzungseinheit 4 gibt bei Erreichen des Kraftschlussmaximums zwischen Radsatz und Schiene und bei einem Differenzdrehzahlwert (Δn) kleiner als der Differenzdrehzahlschwellwert ein Rücksetzsignal 8 aus, wobei die Begrenzungseinheit 4 mit der Umschalteinheit 2 durch die Ausgabe des Rücksetzsignals 8 verbunden ist. Die Umschalteinheit 2 wird somit durch das Rücksetzsignal 8 während der Begrenzung des Ständerfrequenzwertes (f_{S}) durch die Begrenzungseinheit 4 aufgrund des vorstehend genannte Kriterium angesteuert. Durch diese Ansteuerung durch das Rücksetzsignal 8 setzt die Umschalteinheit 2 gemäss Fig. 2 den an ihrem Ausgang anliegenden Drehmomentsollwert (Mₛₒₗₗ) auf einen ihr an einem weiteren Eingang zugeführten aktuellen Drehmomentistwert (Mᵢₛₜ) (S5). Mittels des Setzens des Drehmomentsollwertes (Mₛₒₗₗ) auf den aktuellen Drehmomentistwert (Mᵢₛₜ) während der Begrenzung des Ständerfrequenzwertes (f_{S}) wird auf sehr einfache Weise erreicht, dass der Ständerfrequenzwert (f_{S}) aus der Begrenzung geführt wird, so dass die Traktionsregelung aus der Begrenzung des Ständerfrequenzwertes (f_{S}) wieder in den eingangs beschrieben Regelzustand übergehen kann. Die Traktionsregelung ist somit nur sehr kurze Zeit ausserhalb des Regelzustandes und wird zusätzlich nicht von gängigen drastischen Eingriffen in Form von Reduktionen des Drehmomentsollwertes (Mₛₒₗₗ) durch die Radschlupfregelungseinheit, insbesondere beim Anfahren und bei schnellen Beschleunigungsänderungen des Antriebsmotors beeinflusst. Der Schlupf zwischen Radsatzes und Schiene und der damit einhergehende Verschleiss wird dadurch weiter vermindert.

Der der Umschalteinheit 2 zugeführte aktuelle Drehmomentistwert (Mᵢₛₜ) wird einer nicht näher ausgeführten herkömmlichen Antriebsmotorsensorik entnommen oder durch einen Regelungsbeobachter geschätzt, liegt aber erfindungsgemäss an einem weiteren Ausgang der Drehmomentreglungseinheit 3 an, da der Drehmomentreglungseinheit 3 der aktuelle Drehmomentistwert (Mᵢₛₜ) zu Regelungszwecken bereits vorliegt, so dass auf zusätzliche kostenintensive Signalführungen und Signalübertragungen verzichtet werden kann. Desweiteren ist die Umschalteinheit 2 vorteilhaft ein rücksetzbarer Integrator, der besonders einfach mit diskreten Bauteilen oder als digitales Bauelement realisiert werden.

Erfindungsgemäss kann die Vorrichtung zur Durchführung des Verfahrens in mindestens einem nicht dargestellten digitalen Mikroprozessor implementiert werden, so dass vorteilhaft auf diskrete Bauteile verzichtet werden kann und eine Anpassung der Vorrichtung an Antriebsmotoren verschiedenster Anwendungen erleichtert wird und somit einfach vollzogen werden kann.

Es versteht sich, dass die Vorrichtung zur Durchführung des Verfahrens sowohl für jeweils einen Antriebsmotor als auch für mehrere Antriebsmotoren zusammen vorgesehen ist.

Weiterhin ist es offensichtlich, dass andere als die im Ausführungsbeispiel angegebenen Blöcke, Signale und Werte verwendet werden können.

## Patentansprüche

1. Verfahren zur Traktionsregelung für ein Schienenfahrzeug mit den Schritten
(S1) Vorgeben eines Drehmomentsollwertes (Mₛₒₗₗ) für eine als Drehmomentreglungseinheit (3) ausgebildete Motorregelungseinheit durch eine Radschlupfregelungseinheit (1) und
(S2) Reduzieren des Drehmomentsollwertes (Mₛₒₗₗ) durch die Radschlupfregelungseinheit (1) bei Erreichen eines vorgebbaren Schwellwertes eines aus einem momentanen Drehzahlwert (n) und einem berechneten Referenzdrehzahlwert gebildeten Differenzdrehzahlwertes (Δn) eines Antriebsmotors eines Radsatzes, wobei
(S3) die Drehmomentreglungseinheit (3) mindestens einem als Asynchronmaschine ausgebildeten Antriebsmotor eines Radsatzes des Schienenfahrzeugs einen Ständerfrequenzwert (f_{S}) vorgibt, **gekennzeichnet durch** den weiteren Schritt
(S4) bei einem Differenzdrehzahlwert (Δn) kleiner als der Differenzdrehzahlschwellwert und bei Erreichen eines Krafschlussmaximums zwischen Radsatz und Schiene Begrenzen des Ständerfrequenzwertes (fs) auf einen ständerfrequenzabhängigen Begrenzungswert (f_{SG}).

2. Verfahren nach Anspruch 1, **gekennzeichnet durch** den weiteren Schritt
(S4.1) Bilden des ständerfrequenzabhängigen Begrenzungswertes (f_{SG}) mittels Tiefpassfilterung des Ständerfrequenzwertes (f_{S}) und mittels einer Vorgabe eines Offsetwertes (k).

3. Verfahren nach Anspruch 2, **gekennzeichnet durch** den weiteren Schritt
(S4.11) Addieren des tiefpassgefilterten Ständerfrequenzwertes (6) mit dem Offsetwert (k).

4. Verfahren nach Anspruch 2, **gekennzeichnet durch** den weiteren Schritt
(S4.12) zugkraftabhängiges Wählen des Offsetwertes (k).

5. Verfahren nach Anspruch 1, **gekennzeichnet durch** den weiteren Schritt
(S5) während der Begrenzung des Ständerfrequenzwertes (fs) Setzen des Drehmomentsollwertes (Mₛₒₗₗ) auf den aktuellen Drehmomentistwert (Mᵢₛₜ).

6. Vorrichtung zur Traktionsregelung für ein Schienenfahrzeug mit einer als Drehmomentreglungseinheit (3) ausgebildeten Motorregelungseinheit und einer Radschlupfregelungseinheit (1), wobei die Radschlupfregelungseinheit (1) durch Vorgabe eines Drehmomentsollwertes (Mₛₒₗₗ) mit der Drehmomentreglungseinheit (3) mittelbar verbunden ist und am Ausgang der Drehmomentreglungseinheit (3) ein Ständerfrequenzwert (f_{S}) anliegt und am Ausgang der Radschlupfregelungseinheit (1) bei Erreichen eines vorgebbaren Schwellwertes eines aus einem momentanen Drehzahlwert (n) eines Antriebsmotors eines Radsatzes und einem berechneten Referenzdrehzahlwert gebildeten Differenzdrehzahlwertes (Δn) ein reduzierter Drehmomentsollwert (Mₛₒₗₗ) anliegt, **dadurch gekennzeichnet, dass** eine Begrenzungseinheit (4) vorgesehen ist, die den Ständerfrequenzwert (fs) bei einem Differenzdrehzahlwert (Δn) kleiner als der Differenzdrehzahlschwellwert und bei Erreichen eines Kraftschlussmaximums zwischen Radsatz und Schiene auf einen der Begrenzungseinheit (4) zugeführten ständerfrequenzabhängigen Begrenzungswert (f_{SG}) begrenzt.

7. Vorrichtung nach Anspruch 6, **dadurch gekennzeichnet, dass** am Ausgang der Begrenzungseinheit (4) ein begrenzter Ständerfrequenzwert (fSB) anliegt.

8. Vorrichtung nach Anspruch 6, **dadurch gekennzeichnet, dass** der Ständerfrequenzwert (f_{S}) einem Tiefpassfilter (5) zugeführt sind.

9. Vorrichtung nach Anspruch 8, **dadurch gekennzeichnet, dass** ein am Ausgang des Tiefpassfilters (5) anliegender tiefpassgefilterter Ständerfrequenzwert (6) und ein Offsetwert (k) einem Summierer (7) zur Bildung des ständerfrequenzabhängigen Begrenzungswertes (f_{SG}) zugeführt sind.

10. Vorrichtung nach Anspruch 6, **dadurch gekennzeichnet, dass** eine durch ein Rücksetzsignal (8) gesteuerte Umschalteinheit (2) mit der Drehmomentreglungseinheit (3) verbunden ist, wobei am Ausgang der Umschalteinheit (2) der Drehmomentsollwert (Mₛₒₗₗ) anliegt.

11. Vorrichtung nach Anspruch 10, **dadurch gekennzeichnet, dass** die Umschalteinheit (2) ein rücksetzbarer Integrator ist.

12. Vorrichtung nach Anspruch 10, **dadurch gekennzeichnet, dass** die Begrenzungseinheit (4) durch Ausgabe des Rücksetzsignals (8) bei Erreichen des Kraftschlussmaximums und bei einem Differenzdrehzahlwert (Δn) kleiner als der Differenzdrehzahlschwellwert mit der Umschalteinheit (2) verbunden ist.

13. Vorrichtung nach Anspruch 10, **dadurch gekennzeichnet, dass** die Umschalteinheit (2) an ihrem Eingang mit der Radschlupfregelungseinheit (1) verbunden ist, wobei am Eingang der Umschalteinheit (2) der Drehmomentsollwert (Mₛₒₗₗ) anliegt.

14. Vorrichtung nach Anspruch 13, **dadurch gekennzeichnet, dass** an einem weiteren Eingang der Umschalteinheit (2) ein aktueller Drehmomentistwert (Mᵢₛₜ) zugeführt ist.

15. Vorrichtung nach Anspruch 14, **dadurch gekennzeichnet, dass** der aktuelle Drehmomentistwert (Mᵢₛₜ) an einem weiteren Ausgang der Drehmomentreglungseinheit (3) anliegt.

16. Vorrichtung nach einem der Ansprüche 6 bis 15, **dadurch gekennzeichnet, dass** die Vorrichtung in mindestens einem digitalen Mikroprozessor implementiert ist.
